# DEMANDE DE BREVET EUROPEEN

(11) **EP 0 919 755 A1**
(43) Date de publication de la demande: **02.06.1999**
(21) Numéro de dépôt: 98204049.5
(22) Date de dépôt: 01.12.1998
(51) Int. Cl.: F16K 31/06

(54) **Electrovanne proportionnelle**

(30) Priorité: 01.12.1997 FR 9715104
(71) Demandeur: RENAULT, 92109 Boulogne-Billancourt (FR)
(72) Inventeur: De Bossoreille, Antoine, 38000 Grenoble (FR); Herman, Thierry, 78800 Houilles (FR)
(74) Mandataire: Fernandez, Francis

(57) **Abrégé**

Dispositif d'électrovanne 9 à trois voies du type utilisé pour la commande d'une vanne pneumatique de recirculation des gaz d'échappement d'un moteur à combustion interne, comprenant un organe magnétique d'actionnement d'une soupape 21 mobile entre deux positions d'extrémité, la soupape pouvant prendre une infinité de positions entre les première et deuxième positions d'extrémité, une première conduite 18 pourvue d'un siège de soupape 20, la soupape 21 obturant la première conduite 18 dans la première position d'extrémité en étant en contact avec le siège 20, une deuxième et une troisième conduites 12 et 10. Les deuxième et troisième conduites 12 et 10 sont en communication mutuelle lorsque la soupape 21 est dans sa première position d'extrémité. Les première et troisième conduites 18 et 10 sont en communication mutuelle lorsque la soupape 21 est dans sa deuxième position d'extrémité, la deuxième conduite 12 comprenant un orifice 23 obturé par la soupape 21 dans sa deuxième position d'extrémité.

## Description

La présente invention concerne le domaine des électrovannes utilisées notamment dans le circuit de recirculation des gaz d'échappement d'un moteur à combustion interne.

Afin de réduire la création d'oxyde d'azote dans les chambres de combustion du moteur, une partie des gaz d'échappement est renvoyée dans lesdites chambres de combustion. La quantité de gaz remise en circulation dépend des besoins du moteur. Il est par conséquent nécessaire d'en commander le débit. A cet effet, plusieurs systèmes de recirculation des gaz d'échappement existent qui peuvent fonctionner par exemple avec des moteurs à turbo à géométrie variable pouvant être équipés d'une soupape de décharge du turbo. Dans le cas d'une vanne pneumatique de recirculation des gaz d'échapppement, l'ouverture de ladite vanne pneumatique est possible à l'aide de la dépression de la pompe à vide du circuit de freinage. Une électrovanne proportionnelle est placée entre la pompe à vide et la vanne pneumatique. L'électrovanne proportionnelle est commandée par un calculateur, ce qui permet de contrôler la dépression de commande envoyée à la vanne pneumatique et donc son ouverture.

En l'état actuel, les électrovannes proportionnelles couramment utilisées présentent, à certains points de fonctionnement, un débit de fuite élevé vers la pompe à vide. Cela a pour effet de diminuer la dépression disponible pour le système d'assistance de freinage, et pourrait dans certains cas, détériorer le fonctionnement du freinage du véhicule.

La présente invention a donc pour objet de diminuer la consommation de vide et en particulier de la supprimer pour les points de fonctionnement où elle n'est pas nécessaire.

Le dispositif d'électrovanne à trois voies, selon l'invention, est du type utilisé pour la commande d'une vanne pneumatique de recirculation des gaz d'échappement d'un moteur à combustion interne.

Le dispositif d'électrovanne comprend un organe magnétique d'actionnement d'une soupape mobile entre deux positions d'extrémité, la soupape pouvant prendre une infinité de positions entre les première et deuxième positions d'extrémité, une première conduite pourvue d'un siège de soupape, la soupape obturant la première conduite dans la première position d'extrémité en étant en contact avec le siège et libérant la première conduite dans la deuxième position d'extrémité en étant écartée du siège, une deuxième et une troisième conduite. Les deuxième et troisième conduites sont en communication mutuelle lorsque la soupape est dans sa première position d'extrémité. Les première et troisième conduites sont en communication mutuelle lorsque la soupape est dans sa deuxième position d'extrémité, la deuxième conduite comprenant un orifice obturé par la soupape dans sa deuxième position d'extrémité.

Lorsque la pompe à vide est reliée à la deuxième conduite, la consommation de vide est supprimée lorsque la soupape est dans sa deuxième position d'extrémité, la deuxième conduite étant obturée. On réduit ainsi la charge de la pompe à vide ce qui garantit un bon fonctionnement du système de freinage du véhicule également relié à la pompe à vide.

Dans un mode de réalisation de l'invention, un siège de soupape est prévu à l'orifice de la deuxième conduite.

Avantageusement, l'élément magnétique d'actionnement comprend un bobinage disposé dans une armature magnétique, et un noyau creux formant la première conduite. Le noyau peut être pourvu d'une surface radiale d'extrémité formant un siège de soupape.

On prévoit généralement que l'orifice de la deuxième conduite et le noyau sont coaxiaux, la soupape étant mobile axialement entre ces deux éléments, une surface supérieure radiale de la soupape étant disposée du côté du noyau et une surface inférieure radiale de la soupape étant disposée du côté de l'orifice de la deuxième conduite.

Dans un mode de réalisation de l'invention, le dispositif d'électrovanne comprend une chambre en communication avec la troisième conduite, la deuxième conduite faisant saillie dans ladite chambre. On peut prévoir que la soupape est de diamètre inférieur à celui de ladite chambre.

Le dispositif d'électrovanne communique avec la pression atmosphérique par sa première conduite, avec la pompe à vide par sa deuxième conduite et avec la vanne pneumatique par sa troisième conduite.

Le fonctionnement de l'électrovanne est commandé par un calculateur de contrôle du moteur. Sous l'action d'un signal électrique en provenance du calculateur, le bobinage va créer une force magnétique qui va attirer la soupape vers son siège de la première conduite.

En fonction du rapport cyclique d'ouverture du signal de commande, la soupape va se placer à une position intermédiaire entre l'ouverture et la fermeture de l'orifice de la première conduite. Cette position est obtenue par un état d'équilibre entre la force magnétique et les forces de pression et de gravité. Lorsque le rapport cyclique d'ouverture est nul, la soupape repose sur le siège de l'orifice de la deuxième conduite qui est ainsi obturée. La consommation de vide est nulle et la vanne pneumatique est mise à la pression atmosphérique.

Au contraire, lorsque le rapport cyclique d'ouverture est égal à 1, la soupape est attirée contre le siège de la première conduite qui est ainsi obturée. La vanne pneumatique est alors reliée à la pompe à vide et est donc commandée par une pression très faible.

Entre ces deux positions, la soupape autorise une entrée d'air plus ou moins grande par la première conduite ce qui aboutit à une pression de commande de la vanne pneumatique comprise entre une pression quasi nulle et la pression atmosphérique.

La présente invention sera mieux comprise à l'étude de la description détaillée d'un mode de réalisation pris à titre d'exemple nullement limitatif illustré par les dessins annexés sur lesquels :
la figure 1 est un schéma d'un circuit de recirculation des gaz d'échappement comprenant une électrovanne proportionnelle selon l'invention ;
la figure 2 est une vue en coupe schématique de l'électrovanne proportionnelle selon l'invention ;
la figure 3 est un graphique illustrant la quantité de fuite en fonction du rapport cyclique d'ouverture.

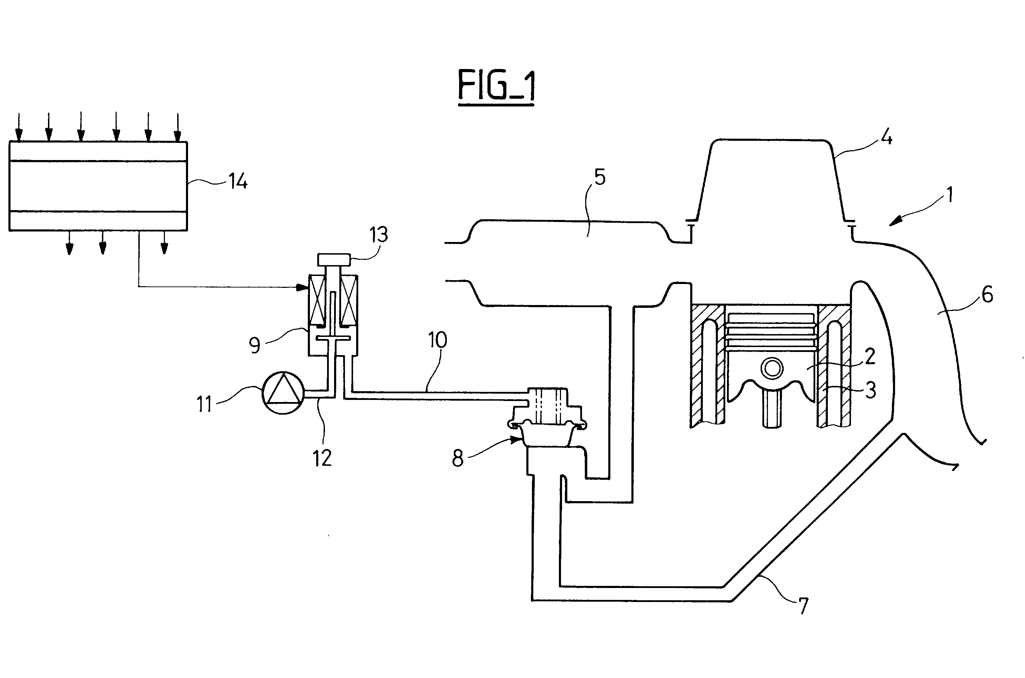

Comme on peut le voir sur la figure 1, le moteur à combustion interne 1 est pourvu d'au moins un piston 2 disposé dans un cylindre 3, l'ensemble piston 2 et cylindre 3 étant recouvert d'une culasse 4. La culasse 4 est en communication d'une part avec un collecteur d'admission 5 et d'autre part avec un collecteur d'échappement 6. Le collecteur d'échappement 6 est relié d'une part à des moyens de traitement des gaz d'échappement tel qu'un catalyseur non représenté, et d'autre part à une conduite 7 de recirculation des gaz d'échappement. La conduite de recirculation 7 est en communication avec le collecteur d'admission 5 par l'intermédiaire d'une vanne pneumatique 8.

On peut ainsi, lorsque le moteur fonctionne à faible charge, n'admettre dans le moteur que la quantité d'air strictement nécessaire à la combustion en mélangeant l'air destiné à la combustion à une partie des gaz d'échappement dépourvus d'oxygène et par conséquent ne produisant pas d'oxyde d'azote lors de leur passage dans les chambres de combustion du moteur.

La vanne pneumatique 8 est commandée par un signal de pression en provenance d'une électrovanne 9 par l'intermédiaire d'une conduite de dépression 10. L'électrovanne 9 est reliée à une pompe à vide 11 par une conduite 12, et à la pression atmosphérique par l'intermédiaire d'un filtre à air 13.

L'électrovanne 9 est commandée par un signal électrique en provenance d'un calculateur 14 de contrôle du moteur 1 lequel reçoit en entrée une pluralité de signaux en provenance par exemple de la pédale d'accélérateur, de sondes disposées dans le moteur etc. Le calculateur 14 émet en sortie des signaux de commande destinés à l'électrovanne 9, à des organes d'injection du moteur etc. L'électrovanne 9 reçoit donc un signal de commande carré d'une amplitude et d'une fréquence prédéterminées, et dont le rapport cyclique d'ouverture est fourni par le calculateur 14.

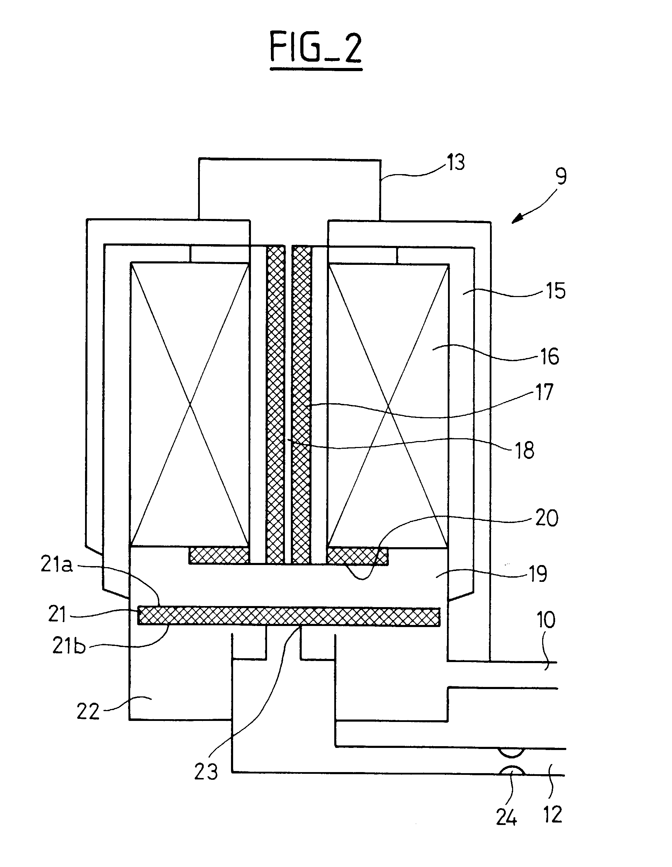

Comme on peut le voir sur la figure 2, l'électrovanne 9 comprend une armature magnétique 15 dans laquelle est disposé un bobinage 16. Un noyau 17 est disposé dans l'alésage du bobinage 16 et est pourvu d'un trou cylindrique le traversant sur toute sa longueur et formant une conduite d'air atmosphérique 18 en communication à sa partie supérieure avec le filtre à air 13 et en communication à sa partie inférieure avec une chambre 19. L'extrémité inférieure du noyau 17 est solidaire d'un siège de soupape 20.

Dans la chambre 19 est disposée une soupape 21 se présentant sous la forme d'un disque circulaire plat pourvu d'une surface supérieure 21a et d'une surface inférieure 21b. Sous la soupape 21 est prévue une chambre 22 en communication avec la conduite de dépression 10. La conduite de vide 12 fait saillie verticalement dans la chambre 22 et est pourvue d'un orifice 23 d'axe vertical horizontal et sensiblement aligné sur la conduite 18 du noyau 17.

Dans la position de la soupape 21 illustrée sur la figure 2, la surface inférieure 21b de la soupape 21 repose sur l'orifice 23 de la conduite 12 en l'obturant. La conduite d'air atmosphérique 18 est en communication avec la chambre 19, la soupape étant écartée de son siège 20. La chambre 19 et la chambre 22 sont en communication par l'espace laissé libre entre les bords de la soupape 21 et la paroi formant lesdites chambres 19 et 22, le diamètre de la soupape 21 étant inférieur à celui desdites chambres 19 et 22. La conduite de dépression 10 est ainsi soumise à la pression atmosphérique. La soupape 21 est dans cette position en l'absence de signal de commande en provenance du calculateur 14 (figure 1) c'est-à-dire lorsque le rapport cyclique d'ouverture est nul.

Au contraire, lorsque le rapport cyclique d'ouverture est égal à 1, le champ magnétique créé par la bobine 16 et le noyau 17 attire la soupape 21 vers le haut jusqu'à ce qu'elle soit en contact avec le siège 20 et obture la conduite d'air atmosphérique 18. Dans cette position, la soupape 21 est écartée de l'orifice 23 de la conduite 12. La chambre 22 est en communication avec la conduite 12 et la conduite de dépression 10 est soumise à la pression de la pompe à vide 11 (figure 1). On notera toutefois que la conduite de vide 12 est munie d'une restriction fixe 24 destinée à diminuer la consommation de vide en créant une perte de charge.

Lorsque le rapport cyclique d'ouverture est compris entre 0 et 1, la soupape 21 prend une position intermédiaire entre les deux positions décrites ci-dessus. La soupape 21 étant disposée entre le siège 20 et l'orifice 23 de la conduite de vide 12 sans être contact avec l'un de ces éléments. La pression régnant dans la chambre 22 et par suite dans la conduite de dépression 10 est alors fonction de la position de la soupape 21 entre le siège 20 et l'orifice 23 de la conduite de vide 12.

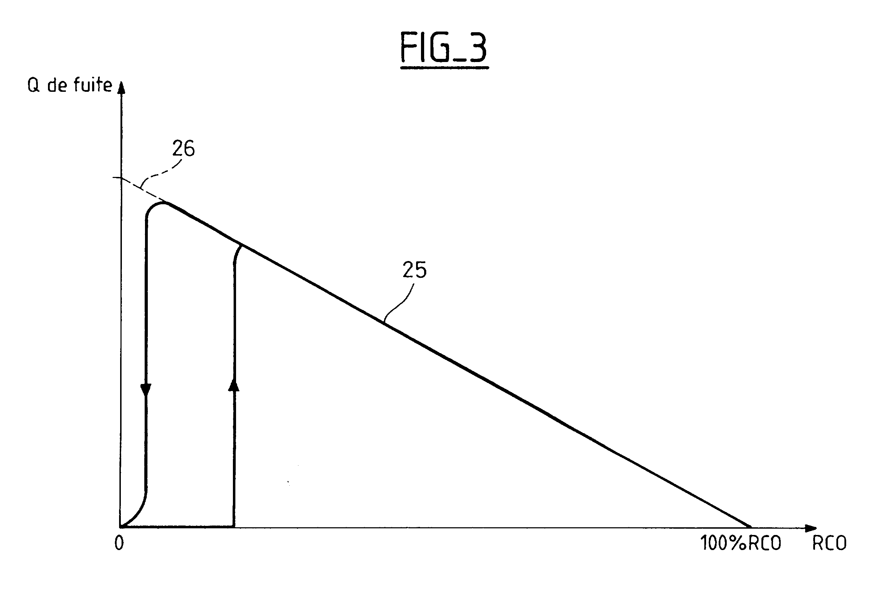

La figure 3 montre l'évolution de la quantité d'air pompée par la pompe à vide 6, également appelée quantité de fuite Q, en fonction du rapport cyclique d'ouverture du signal de commande de la bobine 16. La courbe en trait continu 25 représente le fonctionnement de l'électrovanne conforme à l'invention tandis que la courbe en trait pointillé 26 représente le fonctionnement d'une électrovanne selon l'art antérieur.

Dans l'art antérieur, la quantité de fuite évolue en fonction du rapport cyclique d'ouverture avec une valeur maximale pour un rapport cyclique d'ouverture nul pour lequel la conduite d'air atmosphérique est ouverte et la vanne pneumatique est fermée obturant la conduite de recirculation ce qui correspond à un fonctionnement du moteur sous une charge élevée ce qui se produit fréquemment. On voit donc que dans ce type de fonctionnement, la pompe à vide était fortement sollicitée lors d'un rapport cyclique d'ouverture faible en raison de la communication permanente entre la conduite d'air atmosphérique et la conduite de vide.

Au contraire, selon l'invention, lorsque le rapport cyclique d'ouverture est nul, la soupape 21 obture l'orifice 23 de la conduite de vide 12 et rend la quantité de fuite nulle en supprimant ainsi une sollicitation inutile de la pompe à vide 6. Lorsque le rapport cyclique d'ouverture est égal à 1, on constate que la quantité de fuite est également nulle en raison de l'obturation de la conduite d'air atmosphérique 18 par la soupape 21.

Dans la zone où le rapport cyclique d'ouverture est faible, on constate qu'un phénomène d'hystérésis apparaît. Ce phénomène est dû à la différence de pression entre la surface supérieure 21a et la surface inférieure 21b de la soupape 21 dans la position illustrée sur la figure 2, une portion de la surface inférieure 21b correspondant à l'orifice 23 de la conduite de vide 12 étant soumise à une pression extrêmement faible comparée à la pression atmosphérique existante sur le reste de la surface inférieure 21b et sur l'ensemble de la surface supérieure 21a. Un rapport cyclique d'ouverture suffisant soit donc être atteint pour lever la soupape 21. Le dimensionnement du diamètre de l'orifice 23 est le résultat d'un compromis entre la stabilité de la soupape 21 sur ledit orifice 23 et donc l'étanchéité du contact entre la soupape 21 et l'orifice 23, et la force nécessaire au décollement de la soupape 21 c'est-à-dire le rapport cyclique d'ouverture minimum pour produire ce décollement.

Dans le sens inverse, lorsque la soupape 21 passe de la position d'obturation de la conduite d'air atmosphérique 18 à la position illustrée sur la figure 2, ce phénomène ne se produit pas ce qui se traduit par un rapport cyclique d'ouverture lors de l'obturation de l'orifice 23 plus faible que le rapport cyclique d'ouverture correspondant au décollement de la soupape 21. Cet hystérésis n'est nullement gênant dans la mesure où il ne correspond pas un point de fonctionnement utile de l'électrovanne 9 pour le pilotage de la vanne pneumatique 8.

Grâce à l'invention, on annule le débit de fuite de l'électrovanne à son point de fonctionnement le plus fréquent, sans dégrader les prestations sur les autres points de fonctionnement de la vanne pneumatique. On réduit la charge de la pompe à vide à ce point de fonctionnement ce qui se traduit par un moindre risque de mauvais fonctionnement du circuit d'assistance de freinage et une plus faible consommation d'énergie.

## Revendications

1. Dispositif d'électrovanne (9) à trois voies du type utilisé pour la commande d'une vanne pneumatique de recirculation des gaz d'échappement d'un moteur à combustion interne, comprenant un organe magnétique d'actionnement d'une soupape (21) mobile entre deux positions d'extrémité, la soupape pouvant prendre une infinité de positions entre les première et deuxième positions d'extrémité, une première conduite (18) pourvue d'un siège de soupape (20), la soupape obturant la première conduite dans la première position d'extrémité en étant en contact avec le siège et libérant la première conduite dans la deuxième position d'extrémité en étant écartée du siège, une deuxième et une troisième conduites (12, 10), caractérisé par le fait que les deuxième et troisième conduites sont en communication mutuelle lorsque la soupape est dans sa première position d'extrémité, et que les première et troisième conduites sont en communication mutuelle lorsque la soupape est dans sa deuxième position d'extrémité, la deuxième conduite comprenant un orifice (23) obturé par la soupape dans sa deuxième position d'extrémité.

2. Dispositif selon la revendication 1, caractérisé par le fait qu'il comprend un siège de soupape à l'orifice de la deuxième conduite.

3. Dispositif selon la revendication 1 ou 2, caractérisé par le fait que l'élément magnétique d'actionnement comprend un bobinage(16) disposé dans une armature magnétique (15), et un noyau creux (17) formant la première conduite.

4. Dispositif selon la revendication 3, caractérisé par le fait que le noyau est pourvue d'une surface radiale d'extrémité formant un siège de soupape.

5. Dispositif selon la revendication 3 ou 4, caractérisé par le fait que l'orifice de la deuxième conduite et le noyau sont coaxiaux, la soupape étant mobile axialement entre ces deux éléments, une surface supérieure radiale de la soupape étant disposée du côté du noyau et une surface inférieure radiale de la soupape étant disposée du côté de l'orifice de la deuxième conduite.

6. Dispositif selon l'une quelconque des revendications précédentes, caractérisé par le fait qu'il comprend une chambre en communication avec la troisième conduite, la deuxième conduite faisant saillie dans ladite chambre.

7. Dispositif selon la revendication 6, caractérisé par le fait que la soupape est de diamètre inférieur à celui de ladite chambre.
